# EUROPÄISCHE PATENTSCHRIFT

(11) **EP 1 027 783 B1**
(45) Veröffentlichungstag und Bekanntmachung des Hinweises auf die Patenterteilung: **05.02.2003**
(21) Anmeldenummer: 98959741.4
(22) Anmeldetag: 19.10.1998
(51) Int. Cl.: H04L 7/04, H04B 7/26

(54) **VERFAHREN UND ANORDNUNG ZUR ÜBERTRAGUNG VON DATEN ÜBER EINE FUNKSCHNITTSTELLE IN EINEM FUNK-KOMMUNIKATIONSSYSTEM**
METHODS AND ARRANGEMENT FOR TRANSMITTING DATA VIA A RADIO INTERFACE IN A RADIOCOMMUNICATIONS SYSTEM
PROCEDES ET DISPOSITIF POUR LA TRANSMISSION DE DONNEES PAR L'INTERMEDIAIRE D'UNE INTERFACE RADIO DANS UN SYSTEME DE RADIOCOMMUNICATION

(30) Priorität: 27.10.1997 DE 19747457
(43) Veröffentlichungstag der Anmeldung: 16.08.2000
(73) Patentinhaber: SIEMENS AKTIENGESELLSCHAFT, 80333 München (DE)
(72) Erfinder: RITTER, Gerhard, D-86943 Thaining (DE)
(86) Internationale Anmeldenummer: DE9803061
(87) Internationale Veröffentlichungsnummer: WO99022483

(56) Entgegenhaltungen:
- EP-A- 0 535 403
- EP-A- 0 615 352
- EP-A- 0 767 557
- WO-A-96/11533
- US-A- 5 185 764

## Beschreibung

Die Erfindung betrifft ein Verfahren und eine Anordnung zur Übertragung von Daten über eine Funkschnittstelle in einem Funk-Kommunikationssystem, insbesondere in einem Mobilfunksystem.

In Funk-Kommunikationssystemen werden Nachrichten (beispielsweise Sprache, Bildinformation oder andere Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Die abgestrahlten elektromagnetischen Wellen werden aufgrund von Verlusten durch Reflexion, Beugung und Abstrahlung infolge der Erdkrümmung und dergleichen gedämpft. Infolgedessen sinkt die Empfangsleistung, die bei der empfangenden Funkstation zur Verfügung steht. Diese Dämpfung ist ortsabhängig und bei sich bewegenden Funkstationen auch zeitabhängig.

Zwischen einer sendenden und einer empfangenden Funkstation besteht eine Funkschnittstelle, über die mit Hilfe der elektromagnetischen Wellen eine Datenübertragung stattfindet. Eine Teilnehmerseparierungs erfolgt bei dem GSM-Mobilfunksystem nach einem Zeitmultiplexverfahren, dem sogenannten TDMA-Verfahren (Time Division Multiple Access), welches in einer Kombination mit einem Frequenzmultiplexverfahren FDMA-(Frequency Division Multiple Access) verwendet wird.

In dem GSM-Mobilfunksystem ist ein TDMA-Rahmen in 8 Zeitschlitze unterteilt. Daten von Kommmunikationsverbindungen bzw. Signalisierungsinformationen werden als Funkblöcke, sogenannte Burst, in den Zeitschlitzen übertragen, wobei innerhalb eines Funkblockes Mittambeln mit bekannten Symbolen übertragen werden. Diese Mittambeln können im Sinne von Trainingssequenzen zum empfangsseitigen Abstimmen der Funkstation genutzt werden. Die empfangende Funkstation führt anhand der Mittambeln eine Schätzung der Kanalimpulsantworten für verschiedene Übertragungskanäle durch. Da die Übertragungseigenschaften des Mobilfunkkanals orts- und frequenzabhängig sind, kann die empfangende Funkstation mittels dieser Trainingssequenz eine Entzerrung des Empfangssignals vornehmen.

Bei zunehmender Geschwindigkeit einer mobilen Funkstation ändern sich auch die Übertragungseigenschaften auf der Funkschnittstelle schneller, so daß die Entzerrung schneller nachgeführt werden muß. Das in dem GSM-Mobilfunksystem verwendete TDMA-Teilnehmerseparierungsverfahren ist für nur eine begrenzte Geschwindigkeit der mobilen Funkstation ausgelegt. Oberhalb der Geschwindigkeitsgrenze können sich die Übertragungseigenschaften derart schnell ändern, daß eine entsprechende Nachführung der Entzerrung nicht mehr möglich ist und es zu einem starken Anstieg der Übertragungsfehler kommt. Bei dem bei ca. 900 MHz arbeitenden GSM-System liegt diese Obergrenze bei ungefähr 250 km/h. Das lediglich in der Betriebsfrequenz geänderte GSM1800-System bei ca. 1,8 GHz besitzt eine Geschwindigkeitsgrenze dagegen schon bei etwa 125 km/h.

Für die Mobilfunksysteme der dritten Generation ist ein Frequenzbereich zwischen etwa 2 und 2,5 GHz vorgesehen, was bei einer Verwendung der beschriebenen Technik zu einer weiteren Reduzierung der maximalen Geschwindigkeit führen würde.

Um für die Mobilfunksysteme der zweiten und dritten Generation neue Anwendungsbereiche zu erschließen, bei denen sich Mobilstationen mit sehr hohen Geschwindigkeiten bewegen, wie beispielsweise Hochgeschwindigkeitszüge oder Satelliten mit niedriger Umlaufbahn, bedarf es einer schnelleren Nachführung der Entzerrung auf der Empfangsseite der Funkstationen.

Aus der EP-A-0 535 403 ist ein Verfahren zum Empfangen von gemäß einem TDMA-Verfahren in Zeitschlitzen übertragenen digitalen Datensignalen bekannt. Die digitalen Datensignale enthalten jeweils eine Anzahl von Symbolen mit einer Trainingssequenz von Symbolen. Nach einer Speicherung der digitalen Datensignale werden aus einem Teil der digitalen Datensignale eines ersten Zeitschlitzes und aus einem Teil der digitalen Datensignale eines zweiten Zeitschlitzes jeweils Kanalinformationen ermittelt und nachfolgend zu einem geschätzten Kanalinformationswert kombiniert. Anschließend werden die Symbole des digitalen Datensignals des ersten Zeitschlitzes mit dem geschätzten Kanalinformationswert entzerrt und demoduliert.

Aus der EP-A-0 767 557 ist ein Verfahren bekannt, bei dem von einer Mobilstation zumindest zwei Trainingssequenzen von empfangenen Funkblöcken eines TDMA-Übertragungsverfahrens zur Bestimmung einer zeitlichen Lage des Empfangssignals verwendet werden. Die ermittelte zeitliche Lage wird nachfolgend zur Ortsbestimmung der Mobilstation verwendet. Die Mobilstation verwendet dabei Trainingssequenzen in Funkblöcken der eigenen Kommunikationsverbindung oder der eigenen und zusätzlich eine oder mehrere Trainingssequenzen von weiteren Kommunikationsverbindungen, die in der Mobilstation bekannt sind.

Aus der WO-A-9611533 ist ein Verfahren zur Signaldetektion in einem TDMA-System bekannt. Bei diesem Verfahren werden Multipfad-Kanalschätzungen eines ersten Signals und zumindest eines weiteren, interferierenden Signals mittels empfangener Trainingssequenzen ermittelt. Nachfolgend wird das erste Signal unter Verwendung sowohl der Kanalschätzung des ersten Signals als auch der Kanalschätzung des weiteren Signals detektiert.

Aus der US-5 185 764 ist einen Empfänger zum Empfangen von zeitvarianten und verzerrten Datensignalen bekannt. Der Empfänger weist unter anderem einen Kanalschätzer auf, der ein Kanalinformationssignal mittels eines gemeinsam mit den Datensignalen gesendeten Trainingssignals und mittels eines in dem Empfänger gespeicherten Abbildes des Trainingssignals generiert.

Der Erfindung liegt daher die Aufgabe zugrunde, ein auf einem Zeitmultiplexverfahren basierendes Verfahren zur Übertragung von Daten und eine derartige Anordnung anzugeben, die eine Nachführung der Übertragungseigenschaften auch bei hohen Geschwindigkeiten der Funkstationen ermöglichen.

Diese Aufgabe wird gemäß der Erfindung durch das Verfahren nach den Merkmalen des Patentanspruches 1 und die Anordnung nach dem Patentanspruch 5 erfüllt. Vorteilhafte Weiterbildungen der Erfindung sind den Unteransprüchen zu entnehmen.

Beim erfindungsgemäßen Verfahren zur Übertragung von Daten über eine Funkschnittstelle in einem Funk-Kommunikationssystem nach Patentanspruch 1 senden und empfangen zumindest zwei Funkstationen jeweils Daten von Kommunikationsverbindungen in Form von Datensymbolen, wobei eine Funkstation als eine bewegliche Funkstation ausgebildet ist. Die Funkschnittstelle zwischen der Funkstationen ist gemäß einem TDMA-Teilnehmerseparierungsverfahren in Zeitschlitze mit endlichen Funkblöcken organisiert. Die Funkstationen senden innerhalb eines Zeitschlitzes zumindest zwei der jeweils empfangenden Funkstation bekannte Trainingssequenzen. Mittels dieser Trainingssequenzen führen die Funkstationen Kanalschätzungen durch, wobei die Trainingssequenzen dabei derart in dem Zeitschlitz positioniert sind, daß der größte Abstand eines Datensymbols zu der nächst gelegenen Trainingssequenz verringert wird.

Dieses Verfahren besitzt den Vorteil, daß die Änderungen der Übertragungseigenschaften der Funkstrecke zumindest zweimal innerhalb eines Zeitschlitzes durch die Funkstationen festgestellt werden können, wodurch eine Übertragung von Daten bei einer höheren maximalen Geschwindigkeit der beweglichen Funkstation ermöglicht wird. Zu diesem Zweck werden die Trainingssequenzen nach der beschriebenen Art derart innerhalb eines Zeitschlitzes angeordnet, daß der gößte Abstand eines Datensymbols zu der nächst gelegenen Trainingssequenz so klein wie möglich gehalten wird da dieser direkt die Obergrenze der maximalen Geschwindigkeit beeinflußt.

In einer ersten Ausgestaltung der Erfindung führen die Funkstationen eine Inter- und/oder Extrapolation der Kanalschätzungen aus den Trainingssequenzen in einem Zeitschlitz durch. Die Inter- und/oder Extrapolation erfolgt dabei für alle zeitlich auflösbaren Komponenten der bei der Übertragung auf der Funkschnittstelle auftretenden Mehrwegeausbreitung. Diese Ausgestaltung besitzt den Vorteil, daß die zeitliche Variation der Übertragungseigenschaften somit für den gesamten Funkblock in dem Zeitschlitz nachgeführt werden kann, wobei durch die Extrapolation auch begrenzte Voraussagen über zukünftige Übertragungseigenschaften gemacht werden können. Bei zwei oder mehr Trainingssequenzen ist eine lineare Interpolation und/oder Extrapolation möglich, wohingegen bei drei Trainingssequenzen pro Zeitschlitz eine quadratische Interpolation und/oder Extrapolation möglich ist.

Abhängig von der Anzahl der Trainingssequenzen in einem Zeitschlitz wird in einer zweiten Ausgestaltung die Länge der Zeitschlitze im Vergleich zu den in dem GSM-Mobilfunksystem bedannten Funkblockstrukturen variiert, so daß die Datenrate des Funkblockes unabhängig von der Anzahl der Trainingssequenzen konstant gehalten werden kann. Eine beispielhafte Verdoppelung der Länge des Zeitschlitzes bei zwei Trainingssequenzen ergibt eine ähnliche Relation der Anzahl Datensymbole zu der Gesamtzeit des Zeitschlitzes wie bei einer normalen Zeitschlitzlänge und nur einer Trainingssequenz, mit dem Vorteil, daß dieser verlängerte Zeitschlitz problemlos in einen bekannten TDMA-Zeitrahmen integriert werden kann.

Zur Beibehaltung bzw. zur Erhöhung der Datenrate in einem Funkblock kann gemäß einer weiteren Ausgestaltung die Länge der Trainingssequenzen verkürzt werden, wobei die Länge der Zeitschlitze konstant gehalten wird. Eine Verkürzung der Länge der Trainingssequenzen ist vor allem bei Anwendungen wie Hochgeschwindigkeitszüge oder Satelliten möglich und sinnvoll, da beispielsweise durch eine gerade Schienenführung bzw. Umlaufbahn sowie durch nur wenige bzw. keine Obstakel auf der Funkstrecke die Mehrwegeausbreitung (Delay-Spread), d.h. die größt mögliche Verzögerungszeit, mit der ein Datensymbol bei einer Mehrwegeausbreitung von der Funkstation eindeutig empfangen werden kann, deutlich verringert wird.

In einer weiteren Ausgestaltung der Erfindung werden Funkblöcke einer oder mehrerer Kommunikationsverbindungen zu einem Mehrfachfunkblock in einem erweiterten Zeitschlitz zusammengefaßt. Dabei werden Schutzzeiten zwischen den Zeitschlitzen zusätzlich für die Übertragung von Datensymbolen oder zur Datensicherung verwendet. Diese Ausgestaltung läßt sich wiederum vorteilhaft beispielsweise bei Hochgeschwindigkeitszügen und auch bei der Satellitenkommunikation einsetzen. Da in der Regel nicht nur eine sondern mehrere Kommunikationsver-bindungen gleichzeitig zwischen der Basisstation und dem Hochgeschwindigkeitszug zu übertragen sind, werden die Datensymbole mehrerer aktiver Kommunikationsverbindungen in einem derartigen Mehfachfunkblock zusammengefaßt und gemeinsam in dem erweiterten Zeitschlitz übertragen. Durch die größere Anzahl von Trainingssequenzen wird eine schnellere Nachführung der empfängerseitigen Entzerrung erreicht und zusätzliche Übertragungskapazitäten werden durch die Nutzung der Schutzzeiten erschlossen. Durch eine geschickte Wahl der Länge des erweiterten Zeitschlitzes läßt sich dieser problemlos in einen bekannten TDMA-Zeitrahmen integrieren.

In dem erfindungsgemäßen Verfahren zur Übertragung von Daten über eine Funkschnittstelle in einem Funk-Kommunikationssystem senden und empfangen zumindest zwei Funkstationen jeweils Daten von Kommunikationsverbindungen in Form von Datensymbolen, wobei eine Funkstation als eine bewegliche Funkstation ausgebildet ist. Die Funkschnittstelle zwischen der Funkstationen ist gemäß einem TDMA-Teilnehmerseparierungsverfahren in Zeitschlitze mit endlichen Funkblöcken organisiert. Die Funkstationen senden innerhalb eines einer Kommunikationsverbindung zugeordneten Zeitschlitzes zumindest eine der jeweils empfangenden Funkstation bekannte Trainingssequenz. Mittels dieser Trainingssequenz in dem Zeitschlitz und zumindest einer weiteren bekannten Trainingssequenz, die in zumindest einem zumindest einer weiteren Kommunikationsverbindung zugeordneten weiteren Zeitschlitz übertragen wird, führt die bewegliche Funkstation Kanalschätzungen durch.

Vorteilhaft kann die Funkstation eine schnellere Nachführung der Übertragungseigenschaften durchführen, da für den in jeweils einem Zeitschlitz übertragenen Funkblock zumindest zwei Trainingssequenzen für Kanalschätzungen zugrunde liegen.

In einer ersten Ausgestaltung der Erfindung führt die bewegliche Funkstationen und/oder die Funkstation eine Interund/oder Extrapolation der Kanalschätzungen durch. Diese Ausgestaltung besitzt den Vorteil, daß die zeitliche Variation der Übertragungseigenschaften für den gesamten Funkblock in dem Zeitschlitz nachgeführt werden kann, wobei durch die Extrapolation auch begrenzte Voraussagen über zukünftige Übertragungseigenschaften gemacht werden können. Bei zwei oder mehr Trainingssequenzen ist eine lineare Interpolation und/oder Extrapolation möglich, wohingegen bei drei Trainingssequenzen pro Zeitschlitz eine quadratische Interpolation und/oder Extrapolation möglich ist.

In einer zweiten Ausgestaltung der Erfindung werden die Trainingssequenzen auf der Seite der sendenden Funkstation mit einer größeren, konstanten Sendeleistung als die mittlere Sendeleistung für die Datensymbole gesendet. Durch diese Ausgestaltung kann die bewegliche Funkstation exakte Kanalschätzungen über die Übertragungseigenschaften unabhängig von dem Aufenthaltsort und der Leistungsregelung für weitere beweglichen Funkstationen, deren Trainingssequenzen in den weiteren Zeitschlitzen für die Kanalschätzungen verwendet werden, durchführen. Weiterhin ergibt sich durch die größere Sendeleistung eine Verbesserung .des mittleren Signal-Stör-Verhältnisses beim Empfang der Trainingssequenzen.

Alternativ zu dieser Ausgestaltung kann gemäß einer weiteren Ausgestaltung der Erfindung die Sendeleistung für die Trainingssequenzen der Sendeleistung für die Datensymbole entsprechen, wobei die bewegliche Funkstation mittels eines von der Funkstation gesendeten Korrekturfaktors eine Korrektur der Sendeleistung für die Trainingssequenzen in den weiteren Zeitschlitzen vornimmt und anschließend Kanalschätzungen durchführt. Durch diese Ausgestaltung kann die bewegliche Funkstation, wie vorangehend beschrieben, exakte Kanalschätzungen über die Übertragungseigenschaften unabhängig von dem Aufenthaltsort und der Leistungsregelung für die Übertragung von Datensymbolen zu den weiteren beweglichen Funkstationen durchführen.

In einer weiteren Ausgestaltung der Erfindung werden Funkblöcke einer oder mehrerer Kommunikationsverbindungen zu einem Mehrfachfunkblock in einem erweiterten Zeitschlitz zusammengefaßt, wobei die bewegliche Funkstation mittels der Trainingssequenzen in dem Mehrfachfunkblock oder in dem Mehrfachfunkblock und zumindest eines weiteren Zeitschlitzes Kanalschätzungen durchführt. Vorteilhaft ermöglicht diese Ausgestaltung eine sehr genaue Kanalschätzung, da die Trainingssequenzen in dem Mehrfachfunkblock von der Funkstation mit der gleichen Sendeleistung gesendet werden.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: ein Blockschaltbild einer Funkstation mit darin verwirklichten Komponenten für den Empfangspfad,
- FIG 3: eine schematische Darstellung einer Rahmenstruktur in einem TDMA-Teilnehmerseparierungsverfahrens,
- FIG 4: eine schematische Darstellung eines Zeitschlitzes mit einer Trainingssequenz,
- FIG 5: eine schematische Darstellung eines Zeitschlitzes mit zwei Trainingssequenzen,
- FIG 6: ein Blockschaltbild eines Funk-Kommunikationssystems für die Anwendung bei Hochgeschwindigkeitzügen,
- FIG 7: eine schematische Darstellung eines Mehrfachfunkblokkes, und
- FIG 8: eine schematische Darstellung mehrerer aufeinanderfolgender Zeitschlitze.

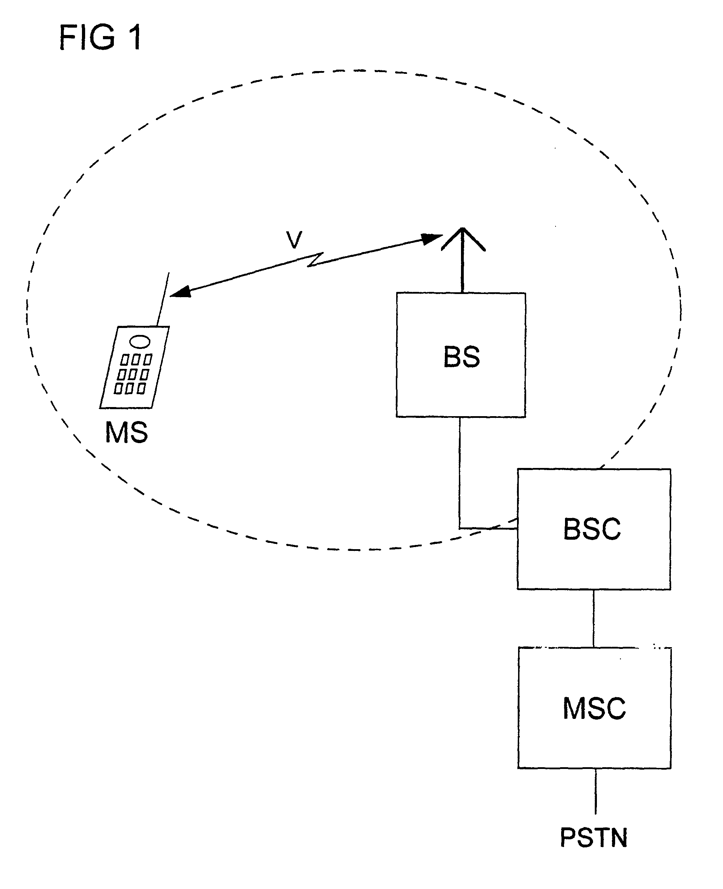

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Basisstations-Steuerung BSC verbunden. Jede Basisstations-Steuerung BSC ermöglicht wiederum eine Verbindung zu zumindest einer Basisstation BS. Diese Basisstationen BS ist eine Funkstation, die über eine Funkschnittstelle Kommunikationsverbindungen zu Funkstationen MS aufbauen kann.

In FIG 1 ist beispielhaft eine Kommunikationsverbindung V zur Übertragung von Nutzdaten und Signalisierungsinformationen zwischen einer mobilen Funkstation MS und der Basisstation BS dargestellt. Die Funktionalität dieser Struktur wird von dem Funk-Kommunikationssystem nach der Erfindung genutzt.

Die Basisstation BS ist mit einer Antenneneinrichtung verbunden, die z.B. aus drei Einzelstrahlern besteht. Jeder der Einzelstrahler strahlt gerichtet in einen Sektor der durch die Basisstation BS versorgten Funkzelle. Es können jedoch alternativ auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) eingesetzt werden kann.

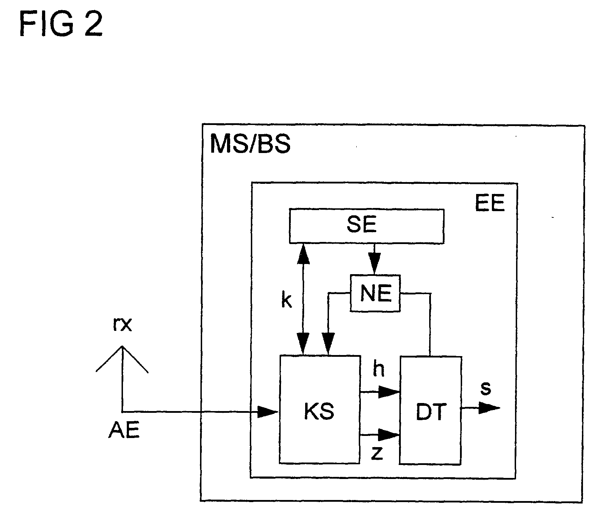

Der beispielhafte Aufbau einer Basisstation BS bzw. Funkstation MS ist in der FIG 2 dargestellt, wobei nur die für den Empfangspfad relevanten Komponenten dargestellt sind. Es besteht üblicherweise jedoch eine zweiseitige Verkehrsbeziehung, d.h. die Basis- BS bzw. Funkstation MS weist gleichsam eine Sendeeinrichtung auf.

Über eine Antenneneinrichtung AE werden Empfangssignale rx, die durch Mehrwegeausbreitung, Störung und Verzögerung beeinträchtigt eintreffen, empfangen und einer Empfangseinrichtung EE zugeführt. Aus den Empfangssignalen rx werden in der Empfangseinrichtung EE, z.B. durch eine Übertragung ins Basis-band und eine darauffolgende Analog/Digitalwandlung digitale Signale erzeugt, die innerhalb der Empfangseinrichtung EE einem Kanalschätzer KS zugeführt werden. Der Kanalschätzer KS ist mit einem Detektor DT verbunden und führt diesem aus den digitalen Empfangssignalen rx abgeleitete Antennendaten z und im Kanalschätzer KS bestimmte Kanalkoeffizienten h zu. Der Detektor DT, der beispielsweise als Viterbi-Detektor ausgebildet ist, nimmt eine Entzerrung und Datendetektion der Antennendaten z unter Zuhilfenahme der Kanalkoeffizienten h vor und erzeugt Symbole s, die weiteren Einrichtungen der Empfangseinrichtung EE zugeführt werden (nicht eingezeichnet). In diesen weiteren Einrichtungen wird daraufhin eine Dekodierung und gegebenenfalls weitere Verarbeitungsvorgänge ausgeführt. Die Symbole s repräsentieren die rekonstruierten Signale der Sendeseite.

Eine Steuereinrichtung SE ist mit dem Kanalschätzer KS verbunden und wertet bei der Kanalschätzung erzeugte Korrelationswerte k aus, die die Grundlage zur Bestimmung der Kanalkoeffizienten h bilden. Abhängig von dieser Auswertung wird die Kanalschätzung in der Weise gesteuert, daß von Detektor DT ermittelte Werte über eine Nachführeinheit NE wahlweise in die Kanalschätzung einbezogen werden.

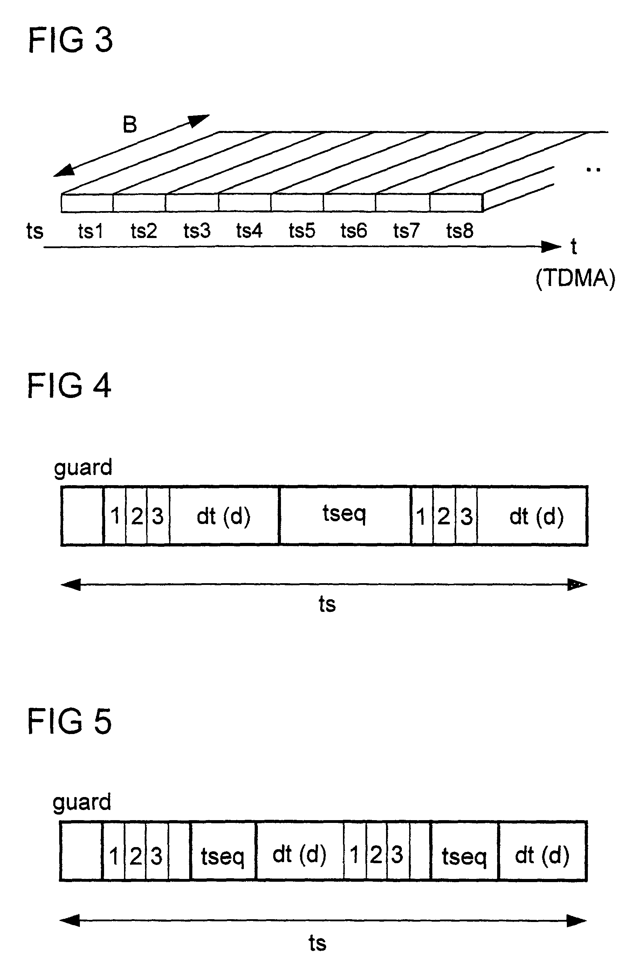

Die Rahmenstruktur der Funkschnittstelle ist aus FIG 3 ersichtlich. Gemäß einer TDMA-Komponente ist eine Aufteilung jeweils eines Frequenzbereiches in mehrere Zeitschlitze ts, beispielsweise 8 Zeitschlitze ts1 bis ts8, vorgesehen. Jeder Zeitschlitz ts innerhalb des Frequenzbereiches B bildet einen Frequenzkanal. Innerhalb der Frequenzkanäle, die zur Datenübertragung vorgesehen sind, werden Informationen mehrerer Verbindungen in Funkblöcken übertragen. Gemäß einer FDMA (Frequency Division Multiple Access)-Komponente sind dem Funk-Kommunikationssystem mehrere Frequenzbereiche B zugeordnet.

Innerhalb eines Frequenzbereiches B werden die aufeinanderfolgenden Zeitschlitze ts nach einer Rahmenstruktur gegliedert. So werden acht Zeitschlitze ts zu einem Rahmen zusammengefaßt, wobei ein bestimmter Zeitschlitz ts des Rahmens einen Frequenzkanal zur Datenübertragung bildet und wiederkehrend von einer Gruppe von Kommunikationsverbindungen genutzt wird. Weitere Frequenzkanäle, beispielsweise zur Frequenz- oder Zeitsynchronisation der mobilen Funkstationen MS werden nicht in jedem Rahmen, jedoch zu vorgegebenen Zeitpunkten innerhalb eines Multirahmens eingeführt. Die Abstände zwischen diesen Frequenzkanälen bestimmen die Kapazität, die das Funk-Kommunikationssystem dafür zur Verfügung stellt.

Gemäß FIG 4 bestehen die Funkblöcke zur Datenübertragung aus Datenteilen dt mit mehreren Datensymbolen d, in denen Abschnitte mit empfangsseitig aus dem GSM-Mobilfunksystem bekannten Mittambeln in der Regel symmetrisch eingebettet sind und in denen auch die Trainingssequenzen tseq übertragen werden. Weiterhin ist innerhalb des Zeitschlitzes ts eine Schutzzeit guard zur Kompensation unterschiedlicher Signalaufzeiten der Kommunikationsverbindungen aufeinanderfolgender Zeitschlitze ts vorgesehen.

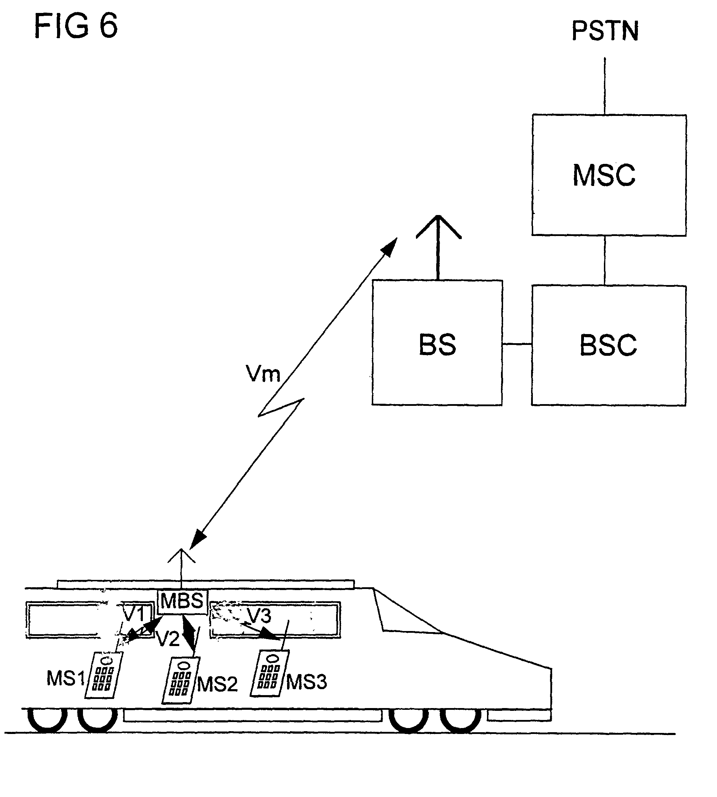

In der FIG 5 ist beispielhaft ein Zeitschlitz ts mit zwei darin eingebettenten Trainingssequenzen tseq darstellt. Die Trainingssequenzen tseq sind dabei derart angeordnet, daß der größte Abstand der Datensymbole d von einer Trainingssequenz tseq minimiert wird. Bei beispielsweise 16 Datensymbolen pro Zeitschlitz ts ist eine Trainingssequenz tseq jeweils nach 4 bzw. 12 Datensymbolen angeordnet, so daß der größte Abstand eines Datensymbols d zu der nächst liegenden Trainingssequenz tseq maximal 3 Datensymbole d beträgt. Aufgrund der Tatsache, daß in einem Zeitschlitz ts zwei oder mehr Trainingssequenzen tseq angeordnet sind, kann die Datenrate für die Übertragung von Datensymbolen eingeschränkt werden. Diese Einschränkung kann jedoch beispielsweise durch eine proportionale zeitliche Erweiterung des Zeitschlitzes ts oder durch die Verwendung von zeitlich kürzeren Trainingssequenzen tseq ausgeglichen werden.

Die FIG 6 zeigt eine beispielhafte Anwendung der Erfindung für Hochgeschwindigkeitszüge. Bei dieser Anwendung können die Trainingssequenzen tseq in einem bestimmten Bereich zeitlich verkürzt werden, da die Funkstrecke zwischen der meist exponiert oder nahe der Fahrgleise angeordneten Basisstation BS und dem Zug nur durch wenige Obstakel oder geographische Hindernisse gestört wird, und somit der Delay-Spread relativ klein ausfällt. Gleiches gilt für die Anwendung der Erfindung für die Satellitenkommunikation.

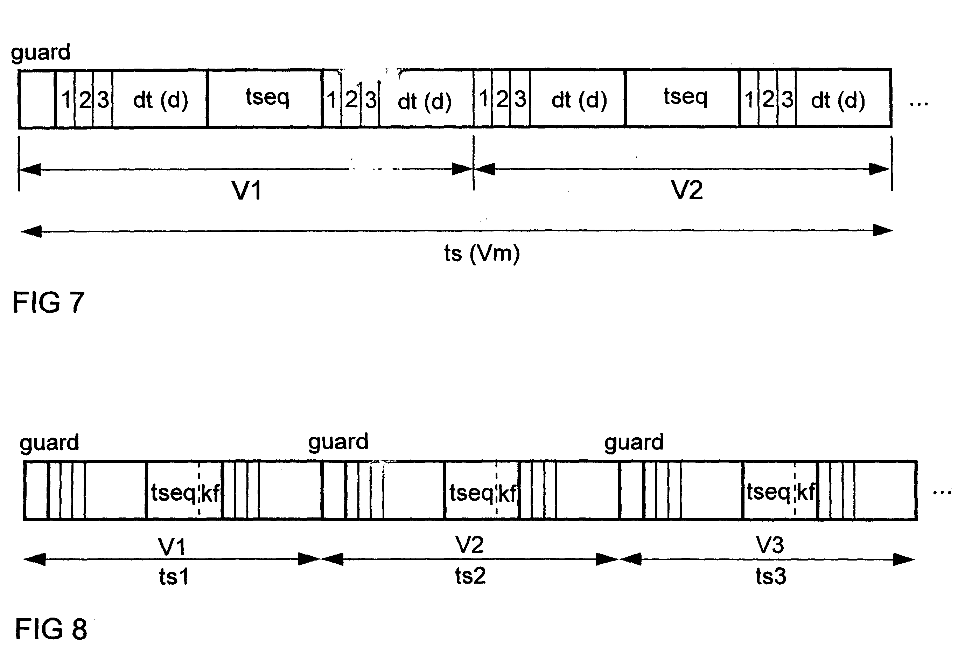

Unter Berücksichtigung der großen Anzahl von Fahrgästen in einem Hochgeschwindigkeitszug ist ein gleichzeitiges Auftreten von mehreren Kommunikationsverbindung V1, V2, V3 von bzw. zu mehreren Mobilstationen MS1, MS2, MS3 innerhalb des Zuges sehr wahrscheinlich. Dieses gebündelte Auftreten von abgehenden und ankommenden Funkblöcken kann in der Weise vorteilhaft dazu verwendet werden, daß innerhalb des Zuges in einer mobilen Basisstation MBS die Funkblöcke der Kommunikationsverbindungen V1, V2, V3 ganz oder teilweise zu einem Mehrfachfunkblock Vm zusammengefaßt werden. Ein derartiger Mehrfachfunkblock ist beispielhaft in der FIG 7 dargestellt.

In dem Mehrfachfunkblock werden die Datensymbole d der beiden Kommunikationsverbindungen V1 und V2 von/zu den Mobilstationen MS1 und MS2 zusammengefaßt und in einem erweiterten Zeitschlitz ts übertragen. Die normalerweise zwischen den Zeitschlitzen ts vorgesehene Schutzzeit guard kann dabei zusätzlich zur Übertragung von Datensymbolen einer oder beider Verbindungen oder für eine erweiterte Datensicherung verwendet werden.

Ein derart erweiterter Zeitschlitz ts läßt sich problemlos in einen Zeitrahmen eines Zeitmultiplexverfahrens einbinden. Die empfangende Basisstation BS bzw. mobile Bassistation MBS verwendet für die Kanalschätzungen die in dem Mehrfachfunkblock Vm übertragenen Trainingssequenzen tseq, wobei jeder Kommunikationsverbindung zumindest eine Teilnehmersequenz tseq zugeordnet ist. Ausgehend von diesen Trainingssequenzen in dem Zeitschlitz ts kann die Basisstation BS bzw. MBS, wie auch in dem in der FIG 5 dargestellten Fall mit zumindest zwei Trainingssequenzen tseq innerhalb eines normalen Zeitschlitzes ts, Kanalschätzungen mittels der Trainingssequenzen tseq durchführen und die Entzerrung des Empfangssignals entsprechend den Übertragungseigenschaften auf der Funkstrecke nachführen.

Die FIG 8 bezieht sich auf ein weiteres Verfahren und darauf basierenden vorteilhaften Ausgestaltungen. Dabei werden Daten auf der Funkschnittstelle nach einem herkömmlichen TDMA-Teilnehmerseparierungsverfahren übertragen. In den Zeitschlitzen ts1, ts2 und ts3 ist jeweils eine Trainingssequenz tseq eingebettet. Die Zeitschlitze ts1 bis ts3 können jeweils einer oder mehreren Kommunnikationsverbindungen zugewiesen sein. In dem dargestellten Beispiel werden auf der Abwärtsstrecke Funkblöcke jeweils einer Kommunikationsverbindung V1, V2, V3 von bzw. zu unterschiedlichen Mobilstationen MS1, MS2, MS3 in jeweils einem Zeitschlitz ts1, ts2, ts3 übertragen.

Zur Durchführung von Kanalschätzungen verwendet beispielsweise die Mobilstation MS2 nicht nur die Trainingssequenz tseq die in dem ihr zugeordneten Zeitschlitz ts2 übertragen wird, sondern auch die ihr bekannten Trainingssequenz tseq des jeweils vorangehenden ts1 und nachfolgenden Zeitschlitzes ts3, in denen Funkblöcke zu den Mobilstationen MS1 und MS2 übertragen werden. Durch eine zusätzliche Interpolation und/oder Extrapolation kann die Mobilstation MS2 somit eine exakte Nachführung der Entzerrung der Empfangssignale entsprechend der Änderungen der Übertragungsverhältnisse auf der Funkstrecke durchführen.

Da in den meisten Fällen die Funkblöcke von der Basisstation BS zu den Mobilstationen MS1, MS2 und MS3 aufgrund von unterschiedlichen Aufenthaltsorten der Mobilstationen mit jeweils einer unterschiedlichen Sendeleistung gesendet werden. Die Mobilstationen MS1, MS2, MS3 verändern fortlaufend ihren Aufenthaltsort, so daß von der Basisstation BS jeweils ein Korrekturfaktor kf, beispielsweise gemeinsam mit der Trainingssequenz tseq, übertragen wird. Bei einer Regelung der Sendeleistung in diskreten Stufen kann dieser Korrekturfaktor kf ein definierter Multiplikationsfaktor sein, der angibt, mit welcher Sendeleistung bzw. mit dem wievielfachten der kleinsten Sendeleistungsstufe der Funkblock in dem jeweiligen Zeitschlitz ts von der Basisstation BS zu der Mobilstation MS gesendet wird. Die Mobilstation MS kann unter Berücksichtigung dieses Korrekturfaktors kf die genaue Sendeleistung der Trainingssequenzen tseq in den weiteren Mobilstationen MS zugeordneten Zeitschlitzen ts ermitteln und das Ergebnis in die Kanalschätzungen einbringen, um dadurch ein genaueres Ergebnis zu erzielen.

Dieses Problem kann allerdings auch in der Weise gelöst werden, daß die Basisstation BS die Trainingssequenzen tseq jeweils konstant mit einer größeren Sendeleistung als die mittlere Sendeleistung für die Datensymbole sendet. Dadurch wird die Übertragung eines Korrekturfaktors hinfällig sowie vorteilhafterweise das Signal-Stör-Verhältnis an den Empfängereingängen der Mobilstationen MS vergrößert.

## Patentansprüche

1. Verfahren zur Übertragung von Daten über eine Funkschnittstelle in einem Funk-Kommunikationssystem, mit zumindest zwei Funkstationen (BS, MS, MBS), die jeweils Daten von Kommunikationsverbindungen in Form von Datensymbolen (d) senden und empfangen, wobei eine Funkstation (MS) als eine bewegliche Funkstation ausgebildet ist, und wobei die Funkschnittstelle gemäß einem TDMA-Teilnehmerseparierungsverfahren in Zeitschlitzen (ts) organisiert ist,
**dadurch gekennzeichnet, daß**
von den Funkstationen (BS, MS, MBS) innerhalb eines Zeitschlitzes (ts) zumindest zwei der jeweils empfangenden Funkstation (BS, MS, MBS) bekannte Trainingssequenzen (tseq) innerhalb von endlichen Funkblöcken gesendet werden, mittels derer die empfangenden Funkstationen (BS, MS, MBS) eine Kanalschätzung durchführen, wobei durch eine Positionierung der Trainingssequenzen (tseq) in dem Zeitschlitz (ts) der größte Abstand eines Datensymbols (d) zu der nächst gelegenen Trainingssequenz (tseq) minimiert wird.

2. Verfahren nach Anspruch 1,
**dadurch gekennzeichnet, daß**
die empfangenden Funkstationen (BS, MS) eine Interpolation und/oder Extrapolation der Kanalschätzungen aus den Trainingssequenzen (tseq) innerhalb eines Zeitschlitzes (ts) durchführt.

3. Verfahren nach Anspruch 1 oder 2,
**dadurch gekennzeichnet, daß**
die Länge der Zeitschlitze (ts) abhängig von der Anzahl der Trainingssequenzen (tseq) variiert wird.

4. Verfahren nach einem der vorhergehenden Ansprüche,
**dadurch gekennzeichnet, daß**
Funkblöcke einer oder mehrerer Kommunikationsverbindungen zu einem Mehrfachfunkblock in einem erweiterten Zeitschlitz (ts) zusammengefaßt werden, wobei Schutzzeiten (guard) zwischen den Zeitschlitzen (ts) zusätzlich für die Übertragung von Datensymbolen (d) oder zur Datensicherung verwendet werden.

5. Anordnung zur Übertragung von Daten über eine Funkschnittstelle, die gemäß einem TDMA-Teilnehmer-Separierungsverfahren in Zeitschlitzen (Ts) organisiert ist, in einem Funk-Kommunikationssystem, mit zumindest zwei Funkstationen (BS, MS, MBS), die jeweils Daten von Kommunikationsverbindungen in Form von Datensymbolen (d) senden und empfangen, wobei eine Funkstation (MS, MBS) als eine bewegliche Funkstation ausgebildet ist, die jeweils eine Antenneneinheit (AE) zum Empfangen von Empfangssignalen (rx) und eine Empfangseinrichtung (EE) mit zumindest
- einem Kanalschätzer (KS) zum Bestimmen von Kanalkoeffizienten (h) und zum Ableiten von Antennendaten (z),
- einer Detektoreinrichtung (DT) zum Entzerren der Antennendaten (z) mittels der Kanalkoeffizienten (h),
- einer Nachführeinrichtung (NE), die von der Detektoreinrichtung (DT) ermittelte Werte dem Kanalschätzer (KS) zur Verfügung stellt, und
- einer Steuereinrichtung (SE) zum Steuern sowohl des Kanalschätzers (KS) als auch der Nachführeinrichtung aufweist,
**dadurch gekennzeichnet,**
**dass** die Funkstationen (BS, MS, MBS)
- zum Aussenden von zumindest zwei der jeweils empfangenden Funkstation (BS, MS, MBS) bekannten Trainingssequenzen (tseq) innerhalb eines Zeitschlitzes (ts) und innerhalb von endlichen Funkblöcken
zur Durchführung einer Kanalschätzung mittels der Trainingssequenzen und
- zur Positionierung der Trainingssequenzen (tseq) in dem Zeitschlitz (ts) zur Minimierung des größten Abstands eines Datensymbols (d) zu der nächstgelegenen Trainingssequenz (tseq) ausgebildet sind.

6. Anordnung nach Anspruch 5,
**dadurch gekennzeichnet,**
**daß** sie als ein Mobilfunksystem ausgebildet ist, wobei die bewegliche Funkstation als eine mobile Basisstation (MBS) verwirklicht ist.

7. Anordnung nach Anspruch 5,
**dadurch gekennzeichnet,**
**daß** sie als ein Mobilfunksystem ausgebildet ist, wobei die bewegliche Funkstation als eine Mobilstation (MS) ausgebildet ist.

## Claims

1. Method for transmitting data over a radio interface in a radio communications system, having at least two radio stations (BS, MS, MBS) which each transmit and receive data relating to communications links in the form of data symbols (d), a radio station (MS) being embodied as a mobile radio station, and the radio interface being organized into timeslots (ts) in accordance with a TDMA subscriber separation method,
**characterized in that**
at least two training sequences (tseq) which are known to the respectively receiving radio station (BS, MS, MBS) are transmitted by the radio stations (BS, MS, MBS) within a timeslot (ts) within finite radio blocks by means of which the receiving radio stations (BS, MS, MBS) carry out a channel estimation, the maximum distance between a data symbol (d) and the nearest training sequence (tseq) being minimized by the positioning of the training sequences (tseq) in the timeslot (ts).

2. Method according to Claim 1, **characterized in that** the receiving radio stations (BS, MS) carries out an interpolation and/or extrapolation of the channel estimations from the training sequences (tseq) within a timeslot (ts).

3. Method according to Claim 1 or 2, **characterized in that** the length of the timeslots (ts) is varied as a function of the number of training sequences (tseq).

4. Method according to one of the preceding claims,
**characterized in that** radio blocks of one or more communications links are combined to form a multiple radio block in an expanded timeslot (ts), guard times (guard) being additionally used between the timeslots (ts) for transmitting data symbols (d) or for data protection.

5. Arrangement for transmitting data over a radio interface which, according to a TDMA subscriber separation method, is organized into time slots (Tx) in a radio communications system, having at least two radio stations (BS, MS, MBS), which each transmit and receive data from communications links in the form of data symbols (d), a radio station (MS, MBS) being embodied as a mobile radio station, each having one antenna unit (AE) for receiving reception signals (rx) and one receiving device (EE) having at least
- a channel estimator (KS) for determining channel coefficients (h) and for deriving them from antenna data (z),
- a detector device (DT) for equalizing the antenna data (z) by means of the channel coefficients (h),
- a tracking device (NE), which provides the channel estimator (KS) with values determined by the detector device (DT), and
- a control device (SE) for controlling both the channel estimator (KS) and the tracking device,
**characterized in that** the radio stations (BS, MS, MBS) are designed
- to transmit at least two training sequences (tseq) which are known to the respectively receiving radio station (BS, MS, MBS), within a time slot (ts) and within finite radio blocks,
in order to carry out a channel estimation by means of the training sequences, and
- to position the training sequences (tseq) in the time slot (ts) so as to minimize the maximum distance between a data symbol (d) and the nearest training sequence (tseq).

6. Arrangement according to Claim 5, **characterized in that** it is embodied as a mobile radio station, the mobile radio station being implemented as a mobile base station (MBS).

7. Arrangement according to Claim 5, **characterized in that** it is embodied as a mobile radio system, the mobile radio system being embodied as a mobile station (MS).

## Revendications

1. Procédé pour la transmission de données par l'intermédiaire d'une interface radio dans un système de radiocommunication, avec au moins deux stations radio (BS, MS, MBS) qui émettent et reçoivent chacune des données de liaisons de communication sous la forme de symboles de données (d), une station radio (MS) étant conçue comme une station radio mobile et l'interface radio étant organisée en créneaux temporels (ts) selon un procédé de séparation d'abonnés TDMA,
**caractérisé par le fait que** les stations radio (BS, MS, MBS) émettent à l'intérieur d'un créneau temporel (ts) et à l'intérieur de blocs radio finis au moins deux séquences d'apprentissage (tseq) qui sont connues de la station radio (BS, MS, MBS) respectivement réceptrice et au moyen desquelles les stations réceptrices (BS, MS, MBS) effectuent une estimation de canal, la distance maximale d'un symbole de données (d) à la prochaine séquence d'apprentissage (tseq) étant minimisée par un certain positionnement des séquences d'apprentissage (tseq) dans le créneau temporel (ts).

2. Procédé selon la revendication 1,
**caractérisé par le fait que** les stations radio réceptrices (BS, MS) effectuent une interpolation et/ou extrapolation des estimations de canal à partir des séquences d'apprentissage (tseq) à l'intérieur d'un créneau temporel (ts).

3. Procédé selon la revendication 1 ou 2,
**caractérisé par le fait que** la longueur des créneaux temporels (ts) est modifiée en fonction du nombre des séquences d'apprentissage (tseq).

4. Procédé selon l'une des revendications précédentes,
**caractérisé par le fait que** des blocs radio d'une ou plusieurs liaisons de communication sont regroupés en un bloc radio multiple dans un créneau temporel (ts) étendu, des temps de garde (guard) entre les créneaux temporels (ts) étant utilisés en plus pour la transmission de symboles de données (d) ou pour la sécurité des données.

5. Dispositif pour la transmission de données par l'intermédiaire d'une interface radio, qui est organisée en créneaux temporels (Ts) selon un procédé de séparation d'abonnés TDMA, dans un système de radiocommunication, avec au moins deux stations mobiles (BS, MS, MBS) qui émettent et reçoivent chacune des données de liaisons de communication sous la forme de symboles de données (d), une station radio (MS, MBS) étant conçue comme une station radio mobile qui comporte à chaque fois une unité d'antenne (AE) pour la réception de signaux reçus (rx) et un dispositif de réception (EE) comportant au moins
- un estimateur de canal (KS) pour déterminer des coefficients de canal (h) et pour déduire des données d'antenne (z),
- un dispositif détecteur (DT) pour corriger les données d'antenne (z) au moyen des coefficients de canal (h),
- un dispositif de poursuite (NE) qui met à disposition de l'estimateur de canal (KS) des valeurs déterminées par le dispositif détecteur (DT), et
- un dispositif de commande (SE) pour commander aussi bien l'estimateur de canal (KS) que le dispositif de poursuite,
**caractérisé par le fait que** les stations radio (BS, MS, MBS) sont conçues
- pour l'émission d'au moins deux séquences d'apprentissage (tseq), connues de la station radio (BS, MS, MBS) respectivement réceptrice, à l'intérieur d'un créneau temporel (ts) et à l'intérieur de blocs radio finis,
pour la mise en oeuvre d'une estimation de canal au moyen des séquences d'apprentissage et
- pour le positionnement des séquences d'apprentissage (tseq) dans le créneau temporel (ts) en vue de la minimisation de la distance maximale d'un symbole de données (d) à la prochaine séquence d'apprentissage (tseq).

6. Dispositif selon la revendication 5,
**caractérisé par le fait qu'**il est conçu comme un système de radiocommunication du service mobile, la station radio mobile étant réalisée comme une station de base mobile (MBS).

7. Dispositif selon la revendication 5,
**caractérisé par le fait qu'**il est conçu comme un système de radiocommunication du service mobile, la station radio mobile étant réalisée comme une station mobile (MS).
